# EUROPÄISCHE PATENTANMELDUNG

(11) **EP 3 598 608 A1**
(43) Veröffentlichungstag der Anmeldung: **22.01.2020**
(21) Anmeldenummer: 18184241.0
(22) Anmeldetag: 18.07.2018
(51) Int. Cl.: H02K 1/24

(54) **RELUKTANZMASCHINE**

(71) Anmelder: Siemens Aktiengesellschaft, 80333 München (DE)
(72) Erfinder: Bach, Regina, 97640 Hendungen (DE); Schmidt, Johannes, 97218 Gerbrunn (DE)

(57) **Zusammenfassung**

Die Erfindung betrifft einen Rotor (1) für eine dynamoelektrische rotatorische Reluktanzmaschine, aufweisend ein Materiallagengefüge (10), wobei das Materiallagengefüge eine Mehrzahl an übereinander angeordneten Materiallagen (11) aufweist, wobei die Materiallagen (11) ferromagnetisches Material (6) aufweisen, wobei die Materiallagen (11) wenigstens eine Flusssperre (4,41) aufweisen, wobei an einem Außenumfang des Rotors (1) eine Bandage (3,141) zur Festigung des Materiallagengefüges (10) ausgeführt ist. Ferner betrifft die Erfindung eine dynamoelektrische rotatorische Reluktanzmaschine (33), aufweisend einen derartigen Rotor (1).

## Beschreibung

Zum magnetischen Kreis einer dynamoelektrischen rotatorischen Reluktanzmaschine, die sowohl als Motor als auch als Generator betrieben werden kann, gehören ein Stator und ein Rotor. Der Rotor und der Stator stellen die leistungserzeugenden Komponenten, auch Aktivteile genannt, der Reluktanzmaschine dar.

Die klassische Reluktanzmaschine weist einen Rotor mit einem Flusssperrenschnitt auf, der einer Ausprägung eines magnetischen Polpaars bzw. mehrerer magnetischer Polpaare dient. Die Flusssperren sind gemäß Stand der Technik mit Luft gefüllt (bzw. mit einem anderen Fluid, welches in der Reluktanzmaschine vorhanden ist, insbesondere einem Gas).

Reluktanzrotoren mit Materiallagen, die einen Flusssperrenschnitt aufweisen, sind sehr filigran, anfällig für Schwingungen und erzeugen Geräusche. Insbesondere durch die filigrane Struktur und schmale Stege können keine hohen Drehzahlen erreicht werden.

Die EP 2775591 A1 zeigt ferner einen Rotor einer inversen Reluktanzmaschine. Der Rotor weist in Rotationsrichtung betrachtet Bereiche unterschiedlicher magnetischer Widerstände auf. Die Bereiche müssen zusammengehalten werden.

Der Erfindung liegt daher die Aufgabe zugrunde, eine Reluktanzmaschine zu verbessern.

Die Lösung der Aufgabe gelingt durch Anspruch 1, d. h. einen Rotor für eine dynamoelektrische rotatorische Reluktanzmaschine, aufweisend ein Materiallagengefüge, wobei das Materiallagengefüge eine Mehrzahl an übereinander angeordneten Materiallagen aufweist, wobei die Materiallagen ferromagnetisches Material aufweisen, wobei die Materiallagen wenigstens eine Flusssperre aufweisen und wobei an einem Außenumfang des Rotors eine Bandage zur Festigung des Materiallagengefüges ausgeführt ist.

Vorzugsweise weist jede Materiallage wenigstens eine Flusssperre auf.

Ferner gelingt die Lösung der Aufgabe durch Anspruch 15, d. h. eine dynamoelektrische rotatorische Reluktanzmaschine mit einem derartigen Rotor.

Das Materiallagengefüge weist vorzugweise eine Mehrzahl an in Richtung einer Rotationsachse übereinander angeordneten Materiallagen auf.

Vorzugsweise weist der Rotor eine Rotationsrichtung um die Rotationsachse auf.

Die Materiallage hat vorteilhaft die bisherigen Funktionen eines Blechs in einem Rotor-Blechpaket einer herkömmlichen dynamoelektrischen rotatorischen Reluktanzmaschine inne und nimmt die Aufgaben eines Blechs wahr.

Vorteilhaft entspricht ein Umriss der Materiallage im Wesentlichen dem Umriss eines Blechs einer herkömmlichen dynamoelektrischen rotatorischen Reluktanzmaschine.

Das Materiallagengefüge hat vorteilhaft die bisherigen Funktionen eines Rotor-Blechpakets einer herkömmlichen dynamoelektrischen rotatorischen Reluktanzmaschine inne und nimmt die Aufgaben eines Rotor-Blechpakets einer herkömmlichen dynamoelektrischen rotatorischen Reluktanzmaschine wahr.

Die Materiallagen sind zur Schaffung des Materiallagengefüges übereinander angeordnet. Vorzugsweise sind die Materiallagen in Richtung einer Rotationsache, in anderen Worten: entlang einer Rotationsachse, des Materiallagengefüges angeordnet.

In einer vorteilhaften Ausführungsform der Erfindung ist die Flusssperre durch wenigstens eine Aussparung in dem ferromagnetischen Material gebildet.

In einer weiteren vorteilhaften Ausführungsform der Erfindung ist die Flusssperre durch amagnetisches Material mit einer magnetischen Permeabilität µr < 5 gebildet.

Der Rotor weist in Rotationsrichtung betrachtet Bereiche unterschiedlicher magnetischer Widerstände auf. Von diesen Bereichen bilden Bereiche mit dem ferromagnetischen Material Pole mit einer Polzahl 2p des Rotors aus, wobei diese Bereiche an amagnetisches Material angrenzen.

Eine Polteilung erstreckt sich vorzugsweise in Rotationsrichtung betrachtet von der Mitte eines Bereichs mit dem amagnetischen Material zur Mitte des nächsten Bereichs mit amagnetischem Material.

Eine Breite der Bereiche mit amagnetischem Material beträgt vorzugsweise in Rotationsrichtung betrachtet zumindest an einer Oberfläche des Rotors zwischen 1% und 50% der Polteilung, wobei eine radiale Tiefe eines Pols wenigstens abschnittsweise mehr als 10% einer Länge eines Kreisbogens der Polteilung entspricht.

Die Bereiche mit dem ferromagnetischen Material sowie das amagnetische Material sind hierbei vorzugsweise aus verschiedenen Materialien herausgeschnitten bzw. ausgestanzt. Mittels der Erfindung sind sie verbindbar.

Zudem ist diese Verbindung fester und beständiger als beispielsweise eine Verbindung mittels Löten.

In einer weiteren vorteilhaften Ausführungsform der Erfindung ist die Bandage im Wesentlichen von einem vorderen axialen Ende des Rotors zu einem hinteren Ende des Rotors ausgeführt.

Dies hat den Vorteil, dass der Rotor keine ungleichmäßige Belastung erfährt.

In einer weiteren vorteilhaften Ausführungsform der Erfindung weist die Bandage Glasfasern und/oder Kohlefasern auf.

Diese Fasern ermöglichen eine stabile Bandage bei geringem Gewicht.

Diese Fasern ermöglichen zudem eine hohe Zugfestigkeit. Dadurch ist der Rotor beständig gegenüber mechanischen Beanspruchungen ausgeführt und fähig, hohe Drehzahlen zu bewerkstelligen.

In einer weiteren vorteilhaften Ausführungsform der Erfindung ist die Bandage, insbesondere ein Bandagenmaterial, amagnetisch und elektrisch nicht (bzw. nur schlecht) leitfähig.

Dies hat den Vorteil, dass keine Zusatzverluste, insbesondere in Form von Wirbelstromverlusten, auftreten. Dies hat überdies den Vorteil, dass der magnetische Kreis nicht beeinflusst wird.

In einer weiteren vorteilhaften Ausführungsform der Erfindung ist die Bandage als Fadenbandage ausgeführt.

Die Fadenbandage kann einen Einzelfaden umfassen. Die Fadenbandage kann ebenso ein Band umfassen. Das Band umfasst vorzugsweise wenigstens zwei, vorzugsweise mehr als zwei, nebeneinander angeordnete Fasern.

Der Einzelfaden hat den Vorteil, dass zu einer Vorspannung der Bandage nur geringe Zugkräfte nötig sind. Eine Verwindung des Rotors ist - im Vergleich zum Band - geringer.

In einer weiteren vorteilhaften Ausführungsform der Erfindung ist ein Faden der Fadenbandage in einem Strang um den Rotor gewickelt.

Dies ist vorteilhaft, da ein Wickelvorgang dadurch erleichtert wird. Zudem kann so eine hohe Zugfestigkeit auf die Fadenbandage aufgebracht werden, sodass die Bandage besonders drehzahlfest ausgeführt ist.

Ferner besteht hierbei nicht die Gefahr eines Vorspannungsverlustes während eines optionalen, aber vorteilhaften Aushärteprozesses der Bandage (insbesondere eines Aushärteprozesses mittels Harz und/oder Klebstoff).

Die Fadenbandage kann einlagig oder mehrlagig ausgeführt sein.

Eine stabile Festigung wird jedoch vorzugsweise durch eine mindestens zweilagig ausgeführte Fadenbandage erreicht. Hierbei ist die Bandage vom vorderen axialen Ende des Rotors zum hinteren axialen Ende und wieder zum vorderen axialen Ende gewickelt.

In einer weiteren vorteilhaften Ausführungsform der Erfindung ist der Faden der Fadenbandage mit einem Fixierungsmittel am Rotor fixiert.

Das Fixierungsmittel ist vorzugsweise derart ausgeführt, dass damit ein Fadenanfang und/oder ein Fadenende der Fadenbandage fixierbar ist. Ferner ist mittels des Fixierungsmittels die Zugkraft auf die Fadenbandage aufbringbar.

In einer weiteren vorteilhaften Ausführungsform der Erfindung ist das Fixierungsmittel eine Rotorendscheibe.

Dies hat den Vorteil, dass eine konstante Vorspannung über das Materiallagengefüge bzw. den Rotor verteilt ist. Eine Einschnürung der Bandage am Materiallagengefüge wird hierbei zudem verhindert, da durch die Rotorendscheibe eine axiale Vorspannung erreicht wird.

In einer weiteren vorteilhaften Ausführungsform der Erfindung ist das Fixierungsmittel eine Klebung.

Das Fixierungsmittel ist beispielsweise ein Klebstoff, ein Klebeband oder eine Kleberaupe. Der Klebstoff und/oder das Klebeband und/oder die Kleberaupe sind vorteilhaft auf dem Rotor aufgebracht. Dies ist platzsparend und ermöglicht einen kompakten Rotor. Zudem können der Klebstoff, das Klebeband und die Kleberaupe auch bei Bedarf nachträglich aufgebracht werden.

In einer weiteren vorteilhaften Ausführungsform der Erfindung ist das Fixierungsmittel eine Nase.

Dies hat den Vorteil, dass keine Klebung nötig ist, die gefährdet ist, beispielsweise durch Temperatureinflüsse, ihre Klebkraft zu verlieren.

Die Nase ist beispielsweise eine Klemmnase, in welche der Fadenanfang und/oder das Fadenende einklemmbar ist.

Die Nase ist beispielsweise eine Öse, in welche der vorteilhaft zu einer Öse gebundene Fadenanfang und/oder das vorteilhaft zu einer Öse gebundene Fadenende einhängbar ist.

Die Nase kann beispielsweise mit der Rotorendscheibe verbunden sein. Die Nase kann auch mit einer Materiallage verbunden sein.

In einer weiteren vorteilhaften Ausführungsform der Erfindung ist die Bandage als Hülsenbandage ausgeführt.

In einer weiteren vorteilhaften Ausführungsform der Erfindung ist die Hülsenbandage auf den Rotor aufgeschrumpft und/oder aufgepresst ausgeführt.

Dies hat den Vorteil, dass an den Materiallagen keine Verwindung, insbesondere durch Fadenzug, stattfindet. Ein weiterer Vorteil ist, dass im Wesentlichen keine Vorspannungsverluste während des optionalen, aber vorteilhaften Aushärteprozesses auftreten. Ein weiterer Vorteil ist, dass im Wesentlichen keine Einschnürungen am Materiallagefüge entstehen und dass eine konstant verteilte Vorspannung über das Materiallagengefüge bzw. den Rotor gewährleistet ist.

Die Hülsenbandage ist vorzugsweise auf den Rotor aufschiebbar ausgeführt. Die Hülsenbandage ist vorzugsweise aufschrumpfbar.

Die Hülsenbandage wird hierbei beispielsweise auf den Rotor geschoben und schrumpft unter Einwirkung von Hitze, sodass sie fest am Rotor anliegt.

Die Hülsenbandage kann überdies auch erwärmt auf den Rotor geschoben werden und durch Abkühlung schrumpfen, sodass sie fest am Rotor anliegt.

Die als Hülsenbandage ausgeführte Bandage hat den Vorteil, dass ein Luftspalt zwischen Rotor und Stator sehr schmal gestaltet werden kann.

Der Bandagefaden kann beispielsweise als Faden (insbesondere runde Form im Querschnitt) oder als Band (insbesondere rechteckige Form im Querschnitt, also breiter als hoch) ausgeführt sein. Um eine stabile Festigung des Materiallagengefüges zu erhalten, ist ein Bandagefaden vorteilhaft überlappend und/oder mehrlagig gewickelt. Der Luftspalt muss daher breiter ausgeführt werden als bei einer Hülsenbandage, damit sich der Rotor im Stator (oder auch der Rotor um den Stator) ungehindert drehen kann. Der breitere Luftspalt stellt aber einen größeren magnetischen Widerstand dar. Es gilt hierbei: In Abhängigkeit einer Nenndrehzahl verschiebt sich ein Wirkungsgradoptimum (kleiner Luftspalt bei niedriger Drehzahl, großer Luftspalt bei hoher Drehzahl). Dies erlaubt eine Anpassung der Bandage, insbesondere Hülsenbandage, an eine benötigte mechanische Festigkeit.

Eine Reluktanzmaschine mit niedriger Drehzahl weist daher beispielsweise genau eine Hülsenbandage auf. Dies ermöglicht einen kleinen Luftspalt bei ausreichender mechanischer Festigkeit.

Eine Reluktanzmaschine mit hoher Drehzahl weist beispielsweise eine mehrlagig ausgeführte Hülsenbandage auf, also z. B. zwei und mehr Hülsen übereinander. Alternativ weist die Reluktanzmaschine mit hoher Drehzahl eine Hülsenbandage auf, die in Radialrichtung dicker ausgeführt ist als die Hülsenbandage für die Reluktanzmaschine mit niedriger Drehzahl. Auf diese Weise kann die benötigte mechanische Festigkeit bewerkstelligt werden.

Ein weiterer Vorteil der Hülsenbandage ist, dass keines der oben genannten Fixierungsmittel benötigt wird.

Insbesondere die Rotorendscheibe am vorderen und/oder hinteren axialen Ende des Rotors benötigt Bauraum. Die Hülsenbandage ermöglicht eine kompakte Bauweise des Rotors und somit der ganzen Maschine bei axialer Vorspannung des Materiallagengefüges.

In einer weiteren vorteilhaften Ausführungsform der Erfindung ist die Bandage, vorzugsweise durch die Benetzung mit wenigstens einem, vorzugsweise UV-härtenden, Klebstoff und/oder Harz sowie durch eine Bestrahlung, vorzugsweise mit UV-Strahlen, ausgehärtet ausgeführt.

Dies hat den Vorteil, dass während des Aushärteprozesses keine Setzung der Bandage stattfindet und somit keine Vorspannungsverluste auftreten.

In einer weiteren vorteilhaften Ausführungsform der Erfindung weisen Fasern der Bandage Klebstoff und/oder Harz bereits vor dem Umwickeln auf. Die gewickelte Fadenbandage bzw. die Hülsenbandage werden vorteilhaft in einem Ofen mittels Wärme/Hitze ausgehärtet.

Die Erfindung bietet den Vorteil, dass hohe Drehzahlen bei Reluktanzmaschinen mit Flusssperrenschnitt erreichbar sind, ohne dass teure, hochfeste Materialien für die Materiallagen verwendet werden müssen. Es können günstige standardisierte Materialien verwendet werden.

Mechanische Spannungen in den Materiallagen, insbesondere in den Stegen, werden zudem reduziert.

Ferner kann eine Aufweitung des Rotors durch Fliehkraft verringert werden.

Im Folgenden wird die Erfindung anhand der in den Figuren gezeigten Ausführungsbeispiele näher beschrieben und erläutert. Es zeigen:
- FIG 1: einen Rotor mit Hülsenbandage,
- FIG 2: einen Querschnitt durch FIG 1 (Reluktanzmaschine mit Flusssperrenschnitt),
- FIG 3: einen weiteren Querschnitt durch FIG 1,
- FIG 4: einen Rotor mit Fadenbandage,
- FIG 5: einen Querschnitt durch FIG 1 (inverse Reluktanzmaschine) und
- FIG 6: eine dynamoelektrische rotatorische Maschine.

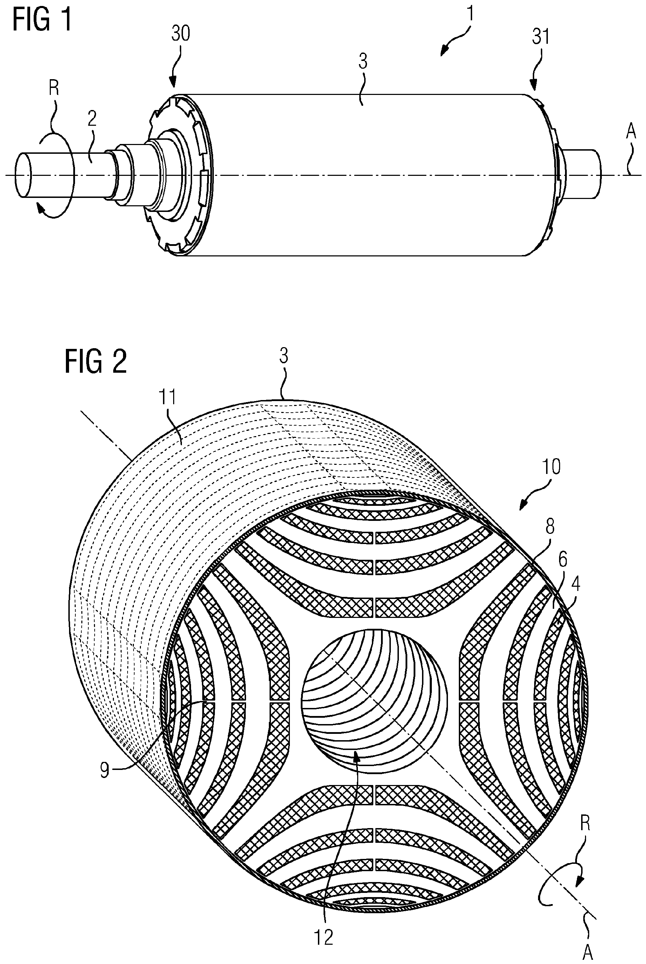

FIG 1 zeigt einen Rotor 1 mit Hülsenbandage 3.

Der Rotor ist vorzugsweise Teil einer dynamoelektrischen rotatorischen Maschine, insbesondere Reluktanzmaschine. Beispielsweise ist die Maschine Teil eines Antriebs für ein elektrisch angetriebenes Kraftfahrzeug oder Luftfahrzeug. Die Maschine kann auch Teil einer Küchenmaschine sein.

Die Erfindung kann zudem bei Antrieben für Industriemaschinen und anderen elektrischen Maschinen, die hohe Anforderungen an einen Wirkungsgrad stellen (z. B. im Teillastbereich und/oder mit hohen Anforderungen an einen breiten Arbeitsbereich), eingesetzt werden.

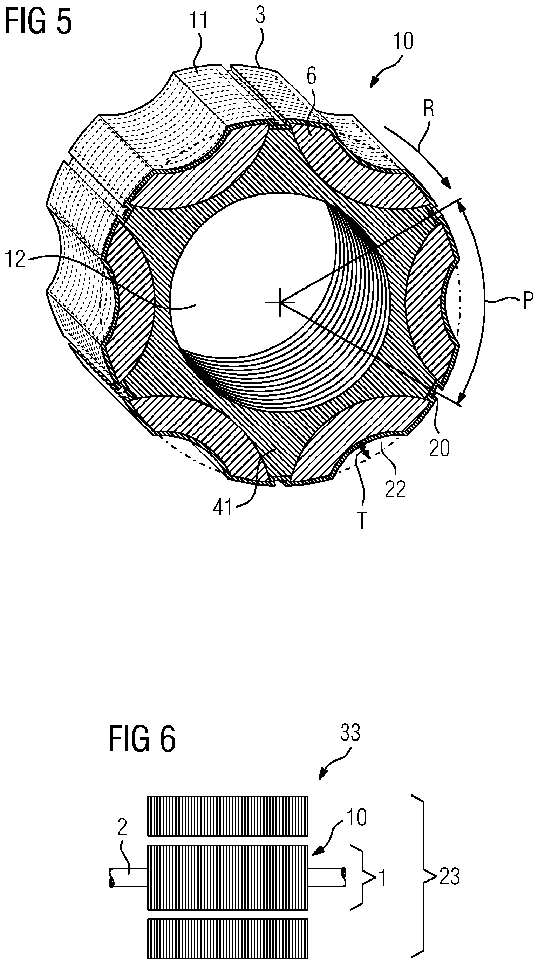

Der Rotor 1 ist an eine Welle 2 angebunden. Der Rotor 1 und die Welle 2 sind in der Figur um eine Rotationsachse A drehbar gelagert, sodass der Rotor 1 in einem Stator (siehe FIG 6) eine Rotation R um die Rotationsachse A vollführen kann.

Der Rotor weist ein vorderes axiales Ende 30 und ein hinteres axiales Ende 31 auf. Die Hülsenbandage 3 erstreckt sich in der Figur vom vorderen 30 bis zum hinteren axialen Ende 31.

Die in der Figur gezeigten Bezugszeichen sind auch für die in den folgenden Figuren gezeigten Ausführungsbeispiele gültig.

FIG 2 zeigt einen Querschnitt durch FIG 1, also ein Querschnitt durch eine Reluktanzmaschine mit Flusssperrenschnitt.

Der Flusssperrenschnitt ist Stand der Technik.

Die Figur zeigt eine Mehrzahl an übereinander angeordneten Materiallagen 11. Die Mehrzahl an Materiallagen stellt ein Materiallagengefüge 10 dar. Eine Materiallage 11 weist in der Figur Bereiche 6 mit ferromagnetischem Material, insbesondere weichmagnetischem Material, auf.

Der Flusssperrenschnitt wird in der Figur durch die Bereiche 4 gezeigt, welche vorzugsweise mit Luft oder einem anderen Gas gefüllt sind.

Die Bereiche 4 können auch mit amagnetischem Material und/oder mit elektrisch nicht oder nur schlecht leitfähigem Material gefüllt sein.

An einem Außenumfang der Materiallage 11 sind Stege 8 ausgeführt, welche die Materiallage mit Flusssperrenschnitt zusammenhalten. Ferner zeigt die Materiallage auch Stege 9.

An einem Innenumfang der Materiallage 11 ist eine Aussparung 12 ausgeführt, welche einer späteren Anbindung an eine Welle dient.

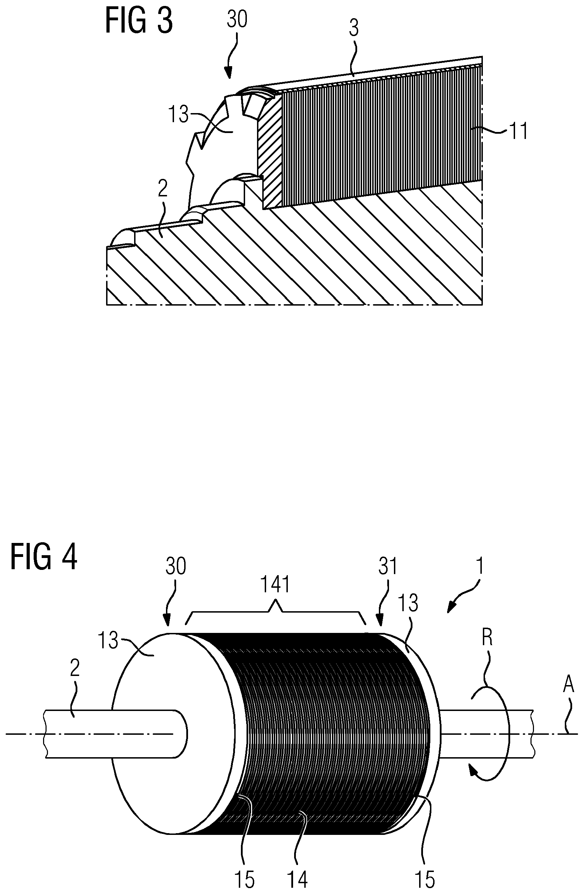

FIG 3 zeigt einen weiteren Querschnitt durch FIG 1.

Der Querschnitt zeigt die Welle 2 des Rotors. Die Figur zeigt eine Rotorendscheibe 13 an einem vorderen axialen Ende 30 des Rotors. Ferner zeigt die Figur die Übereinanderanordnung der Materiallagen 11 sowie die Hülsenbandage 3.

FIG 4 zeigt einen Rotor 1 mit Fadenbandage 141.

Die Figur zeigt, dass ein Bandagefaden 14 von einem vorderen axialen Ende 30 des Rotors 1 zu einem hinteren axialen Ende 31 des Rotors 1 gewickelt ist. Der Faden 14 ist mittels eines Fixierungsmittels am vorderen axialen Ende fixiert. Das Fixierungsmittel ist in der Figur ein Klebepunkt 15. Es sind auch andere Fixierungsmittel denkbar.

Der Bandagefaden 14 kann auch mittels einer in FIG 3 gezeigten Rotorendscheibe 13 (am vorderen 30 und/oder hinteren axialen Ende 31) fixiert sein.

Der Faden 14 ist in der Figur in einem Strang um den Rotor vom vorderen 30 bis zu einem hinteren axialen Ende 31 des Rotors 1 gewickelt. Am hinteren axialen Ende 31 ist der Faden mit einem Fixierungsmittel am Rotor fixiert. In der Figur ist auch das Fixierungsmittel am hinteren axialen Ende 31 des Rotors 1 ein Klebepunkt 15. Zur Fixierung sind jedoch auch andere Fixierungsmittel geeignet, insbesondere jene, die bereits erläutert wurden.

FIG 5 zeigt einen Querschnitt durch FIG 1 in der Ausführung als inverse Reluktanzmaschine.

Die Figur zeigt weichmagnetische Bereiche 6 sowie amagnetisches Material 41. An einem Innenumfang der Materiallage 11 ist eine Materialaussparung 12 zur späteren Anbindung an eine Welle ausgeführt.

Am Außenumfang der Materiallage 11 sind Segmentabschnitte 22 gezeigt. Die Segmentabschnitte 22 sind z. B. luftgefüllt. Um einen Pumpeffekt, der sich bei geometrisch unrunden Rotoren einstellt, oder auch Geräusche zu vermeiden, sind die Segmentabschnitte 22 alternativ mit amagnetischem Material gefüllt. Auch bei hohen Drehzahlanforderungen sind die Segmentabschnitte 22 mit amagnetischem Material gefüllt. Auch dieses Material wird durch die Hülse 3 (oder alternativ durch die bereits beschriebene Fadenbandage 141) gehalten.

Insbesondere für das in der Figur gezeigte Materiallagengefüge 10 ist die Hülsenbandage 3 besonders gut geeignet. Die Hülsenbandage 3 ermöglicht bei Bedarf einen schmalen Luftspalt.

Die Figur zeigt Pole P, welche durch die weichmagnetischen Bereiche 6 gebildet werden.

Ein Pol P wird durch weichmagnetisches Material (Bereich 6) gebildet und ist teilweise von amagnetischem Material 41 umgeben.

Die Vertiefungen 20 des flusssperrenden Bereichs 41 tragen dazu bei, dass Wirbelstromverluste gering gehalten werden.

Ferner zeigt die Figur eine radiale Tiefe T der Pole P.

FIG 6 zeigt eine dynamoelektrische rotatorische Maschine 33 aufweisend einen Rotor 1, der an eine Welle 2 angebunden ist.

Der Rotor 1 ist hierbei beispielsweise der in FIG 1 oder FIG 4 beschriebene Rotor und umfasst ein Materiallagengefüge 10. Der Rotor 1 rotiert vorzugsweise innerhalb eines Stators 23.

Ferner ist jedoch auch eine Ausführung möglich, in welcher der Rotor 1 nicht innerhalb eines Stators 23 rotiert, sondern in welcher der Rotor um den Stator rotiert (Außenläufer).

Die Maschine 33 ist vorzugsweise eine Reluktanzmaschine mit Flusssperrenschnitt oder eine inverse Reluktanzmaschine.

## Patentansprüche

1. Rotor (1) für eine dynamoelektrische rotatorische Reluktanzmaschine (33), aufweisend ein Materiallagengefüge (10), wobei das Materiallagengefüge (10) eine Mehrzahl an übereinander angeordneten Materiallagen (11) aufweist, wobei die Materiallagen (11) ferromagnetisches Material (6) aufweisen, wobei die Materiallagen (11) wenigstens eine Flusssperre (4,41) aufweisen,
**dadurch gekennzeichnet, dass** an einem Außenumfang des Rotors (1) eine Bandage (3,141) zur Festigung des Materiallagengefüges (10) ausgeführt ist.

2. Rotor (1) nach Anspruch 1, wobei die Flusssperre (4,41) durch wenigstens eine Aussparung in dem ferromagnetischen Material (6) gebildet ist.

3. Rotor (1) nach Anspruch 1, wobei die Flusssperre (4,41) durch amagnetisches Material mit einer magnetischen Permeabilität µr < 5 gebildet ist.

4. Rotor (1) nach einem der vorhergehenden Ansprüche, wobei die Bandage (3,141) im Wesentlichen von einem vorderen axialen Ende (30) des Rotors (1) zu einem hinteren Ende (31) des Rotors (1) ausgeführt ist.

5. Rotor (1) nach einem der vorhergehenden Ansprüche, wobei die Bandage (3,141) Glasfasern und/oder Kohlefasern aufweist.

6. Rotor (1) nach einem der vorhergehenden Ansprüche, wobei die Bandage (3,141) als Fadenbandage (141) ausgeführt ist.

7. Rotor (1) nach Anspruch 4, wobei ein Faden (14) der Fadenbandage (141) in einem Strang um den Rotor (1) gewickelt ist.

8. Rotor (1) nach einem der Ansprüche 4 oder 5, wobei der Faden (14) der Fadenbandage (141) mit einem Fixierungsmittel am Rotor (1) fixiert ist.

9. Rotor (1) nach einem der Ansprüche 4 bis 6, wobei das Fixierungsmittel eine Rotorendscheibe ist.

10. Rotor (1) nach einem der Ansprüche 4 bis 6, wobei das Fixierungsmittel eine Klebung (15) ist.

11. Rotor (1) nach einem der Ansprüche 4 bis 6, wobei das Fixierungsmittel eine Nase ist.

12. Rotor (1) nach einem der Ansprüche 1 bis 5, wobei die Bandage (3,141) als Hülsenbandage (3) ausgeführt ist.

13. Rotor (1) nach einem der Ansprüche 1 bis 5 oder 12, wobei die Hülsenbandage (3) auf den Rotor (1) aufgeschrumpft und/oder aufgepresst ausgeführt ist.

14. Rotor (1) nach einem der vorhergehenden Ansprüche, wobei die Bandage (3,141), vorzugsweise durch die Benetzung mit wenigstens einem, vorzugsweise UV-härtenden, Klebstoff und/oder Harz sowie durch eine Bestrahlung, vorzugsweise mit UV-Strahlen, ausgehärtet ausgeführt ist.

15. Dynamoelektrische rotatorische Reluktanzmaschine (33) aufweisend einen Rotor (1) nach einem der Ansprüche 1 bis 14.
